# EUROPÄISCHE PATENTSCHRIFT

(11) **EP 3 326 163 B1**
(45) Veröffentlichungstag und Bekanntmachung des Hinweises auf die Patenterteilung: **08.09.2021**
(21) Anmeldenummer: 16744323.3
(22) Anmeldetag: 08.07.2016
(51) Int. Cl.: G08G 1/01, G08G 1/0967, H04W 40/24, H04W 40/12, H04W 40/20, H04L 29/08

(54) **DATENÜBERTRAGUNGSVERFAHREN, SENDER UND EMPFÄNGER MIT DATENVERARBEITUNGSGERÄT**
DATA TRANSMISSION METHOD, AND TRANSMITTER AND RECEIVER WITH DATA PROCESSING DEVICE
PROCÉDÉ DE TRANSMISSION DE DONNÉES, ÉMETTEUR ET RÉCEPTEUR AVEC UN APPAREIL DE TRAITEMENT DE DONNÉES

(30) Priorität: 21.07.2015 DE 102015213676
(43) Veröffentlichungstag der Anmeldung: 30.05.2018
(73) Patentinhaber: Robert Bosch GmbH, 70442 Stuttgart (DE)
(72) Erfinder: SKUPIN, Christian, 30823 Garbsen (DE); LANGENBERG, Markus, 30559 Hannover (DE); ZAUM, Daniel, 31157 Sarstedt (DE); HOMANN, Hanno, 30629 Hannover (DE); KNORR, Moritz Michael, 31134 Hildesheim (DE); KLEJNOWSKI, Lukas, 30173 Hannover (DE); GERALDY, Alexander, 31141 Hildesheim (DE); PAGEL, Michael, 71640 Ludwigsburg (DE); CAKAR, Emre, 31157 Sarstedt (DE); MARX, Jochen, 31180 Emmerke (DE); HINTERLEITNER, Isabella, 31137 Hildesheim (DE); MIELENZ, Holger, 73760 Ostfildern (DE)
(86) Internationale Anmeldenummer: PCT/EP2016/066261
(87) Internationale Veröffentlichungsnummer: WO 2017/012893

(56) Entgegenhaltungen:
- EP-A1- 1 737 160
- DE-A1-102011 007 755
- DE-A1-102013 222 174
- US-B1- 6 487 393
- US-B1- 6 898 432
- US-B1- 7 251 223

## Beschreibung

Die Erfindung betrifft ein Datenübertragungsverfahren, einen Sender und einen Empfänger mit einem Datenverarbeitungsgerät.

### Stand der Technik

Fahrerassistenzsysteme, die einen Fahrer eines Fahrzeugs mittels einer automatisierten Längs- und Querführung bei der Führung des Fahrzeuges unterstützen sollen, benötigen aktuelle Kartendaten der zu befahrenden Straßen. Eine hochgenaue Karte, die für solch ein Fahrerassistenzsystem benutzt werden kann, kann über einen Server zur Verfügung gestellt werden. Dabei können alle teilnehmenden Fahrzeuge gleichzeitig auch als Datenlieferant dienen, das heißt, sie geben Daten über Verkehrswege an den Server weiter. Ein solches Verfahren zum Erstellen von Karten für hochautomatisiertes Fahren ist in der Druckschrift EP 1 562 332 A1 offenbart.

Die Druckschrift DE 10 2011 007 755 A1 offenbart ein Verfahren zum Übertragen von Daten an eine externe Empfangseinrichtung, bei dem eine Information über eine Übertragungsqualität für mindestens einen Übertragungskanal abhängig vom Ort verwendet wird, um einen Übertragungsort auf einer Fahrroute eines Fahrzeuges auszuwählen.

### Offenbarung der Erfindung

Eine Aufgabe der Erfindung ist die Verbesserung eines Datenübertragungsverfahrens für die Erstellung von Karten für hochautomatisiertes Fahren. Eine weitere Aufgabe der Erfindung ist eine Verbesserung des Datenübertragungsverfahrens, mit dem die Kartendaten von einer zentralen Stelle wieder an die Fahrzeuge verteilt werden.

Diese Aufgaben werden mit dem Verfahren des Anspruchs 1 gelöst. In einem Verfahren zum Übertragen von Daten von einem Fahrzeug an eine externe Empfangseinheit ist eine Information vorgesehen, die eine Übertragungsqualität für mindestens einen Übertragungskanal abhängig von mehreren Orten beinhaltet. Anhand einer Fahrroute des Fahrzeuges und der Information über die Übertragungsqualität für den mindestens einen Übertragungskanal wird ein Übertragungsort ermittelt. Die Daten werden übertragen, wenn das Fahrzeug den Übertragungsort erreicht. Ein Übertragungskanal besteht darin, dass eine zusätzliche Übertragung der Daten von einer Sendeeinrichtung eines ersten Fahrzeugs an mindestens eine Empfangseinrichtung eines zweiten Fahrzeugs erfolgt, wobei das zweite Fahrzeug am Straßenrand abgestellt ist. Das am Straßenrand abgestellte zweite Fahrzeug empfängt dabei Daten von mehreren Fahrzeugen und sendet die von mehreren Fahrzeugen empfangenen Daten zusammenfasst und gebündelt an die externe Empfangseinheit.

Durch die Information über die Übertragungsqualität des mindestens einen Übertragungskanals an mehreren Orten ist festgelegt, wo die Übertragungsqualität für den entsprechenden Übertragungskanal gut ist, und wo die Übertragungsqualität schlecht ist. Außerdem ist dem Fahrzeug bekannt, welche Fahrroute es befahren wird. Anhand der Fahrroute und der Übertragungsqualität abhängig von mehreren Orten kann das Fahrzeug bestimmen, an welchem Ort entlang der Fahrroute für einen oder mehrere Übertragungskanäle eine gute Übertragungsqualität vorliegt. Wenn nun das Fahrzeug eine Information übertragen möchte, kann es anhand der vorliegenden Informationen über die Übertragungsqualitäten und die Fahrroute auswählen, an welchem Ort die Information übertragen werden soll, da an diesem Übertragungsort dann eine gute Qualität für einen Übertragungskanal vorliegt. Die Information beziehungsweise die Daten werden dann übertragen, wenn das Fahrzeug diesen Übertragungsort erreicht. Dadurch wird eine verbesserte Datenübertragung von einem Fahrzeug zu einem Server ermöglicht. Durch die Bündelung der Daten in einem am Straßenrand abgestellten Fahrzeug kann eine Reduzierung der benötigten Bandbreite erreicht werden. Wenn sich beispielsweise ein Verkehrszeichen ändert, würde jedes Fahrzeug, das diese Änderung detektiert, die Daten über diese Änderung an eine zentrale Stelle per beispielsweise Mobilfunk weitergeben. Wenn alle diese Fahrzeuge diese Information an ein am Straßenrand abgestelltes Fahrzeug weitergeben, dieses am Straßenrand abgestellte Fahrzeug diese Daten bündelt und dann nur einzeln an die zentrale Stelle weitergibt, wird Übertragungsbandbreite gespart.

Weiterbildungen des Verfahrens sind in den Unteransprüchen angegeben.

In einer Ausführungsform werden bei der Ermittlung des Übertragungszeitpunktes oder des Übertragungsortes die aktuell gefahrene und/oder die auf der Route des Fahrzeuges zu erwartende Geschwindigkeit berücksichtigt. Durch die Berücksichtigung der aktuell gefahrenen und/oder der zu erwartenden Geschwindigkeiten kann eine exaktere Bestimmung des Übertragungszeitpunktes und/oder des Übertragungsortes erfolgen. Wenn die Fahrgeschwindigkeit von der prognostizierten Fahrgeschwindigkeit abweicht, kann diese Information ebenfalls benutzt werden, um den Übertragungsort beziehungsweise den Übertragungszeitpunkt anzupassen.

In einer Ausführungsform sind für die zu übertragenden Daten Kategorien definiert und in einem Speicher abgelegt. Anhand der Kategorien wird den zu übertragenden Daten eine Priorität zugeordnet. Diese Priorität wird bei der Ermittlung des Übertragungszeitpunktes oder des Übertragungsortes berücksichtigt. Durch die Zuordnung einer Priorität kann bei der Übertragung von Daten berücksichtigt werden, wie wichtig die Übertragung der Daten ist. Eine Änderung eines Verkehrszeichens, wobei dann der Standort, das alte Verkehrszeichen und das neue Verkehrszeichen die Daten wären, die übertragen werden müssen, könnte beispielsweise eine niedrigere Priorität haben, als ein auf der Straße befindliches Hindernis. Die Position des Hindernisses wäre in diesem Fall ein zweiter Datensatz, der übertragen werden soll. Durch die Priorisierung könnte ermöglicht werden, dass zuerst die Daten über das Hindernis, und dann die Daten über das geänderte Verkehrszeichen übertragen werden. Sollten auf der Fahrroute, die in der nächsten Zeit befahren wird, nur sehr wenige Orte vorliegen, für die eine Information über eine gute Übertragungsqualität vorliegt, so könnte die höher priorisierte Information über das Hindernis an diesen Stellen übertragen werden, während die Daten über das geänderte Verkehrszeichen an Stellen mit einer geringeren Übertragungsqualität übertragen werden.

In einer Ausführungsform werden Mobilfunkverbindungen und Funkverbindungen zwischen Antennen am Straßenrand und Fahrzeugen als Übertragungskanäle verwendet. Mittels Mobilfunk, beziehungsweise mobilem Internet, könnten Daten übertragen werden, wobei auf eine bestehende Infrastruktur zurückgegriffen wird. Ebenso ist es aber denkbar, eigene Antennen am Straßenrand, die wiederum mittels Funk oder Kabelverbindungen mit dem Server verbunden sind, als Datenübertragungspunkte zu nutzen. An verschiedenen Orten kann die Übertragungsqualität über Mobilfunk anders sein als die Übertragungsqualität über Antennen am Straßenrand. Diese Information wird bei der Auswahl des Übertragungsortes und des Übertragungskanals berücksichtigt.

In einer Ausführungsform können mehrere Fahrzeuge Daten untereinander weitergeben. Daten über eine Veränderung der Karte, die von einem ersten Fahrzeug detektiert werden, können von diesem Fahrzeug über einen Übertragungskanal an den zentralen Server weitergeben werden. Wenn dem Fahrzeug aktuell aber kein guter Übertragungskanal zur Verfügung steht, kann es die Daten auch an ein zweites Fahrzeug senden, wobei die Weitergabe der Daten vom zweiten Fahrzeug an eine zentrale Stelle wiederum das beschriebene Verfahren verwendet wird. Das zweite Fahrzeug dient in diesem Fall als Relaisfunkstelle, die die Daten des ersten Fahrzeuges empfängt und an den Server weitersendet.

In einer Ausführungsform liegt dem ersten Fahrzeug eine dritte Information über eine Fahrroute des zweiten Fahrzeuges und dem zweiten Fahrzeug eine vierte Information über eine Fahrroute des ersten Fahrzeuges vor. Die dritte und die vierte Information, die aktuelle Geschwindigkeit der Fahrzeuge und/oder die auf den Fahrrouten der Fahrzeuge zu erwartenden Geschwindigkeiten werden bei der Ermittlung des optimalen Übertragungszeitpunktes oder des Übertragungsortes berücksichtigt. Durch die Information über die Fahrrouten der Fahrzeuge kann das erste Fahrzeug eine Übertragung der Daten über ein zweites Fahrzeug genauer planen. Die Übertragung der Daten von einem ersten Fahrzeug über ein zweites Fahrzeug zur zentralen Stelle kann ebenfalls als ein Übertragungskanal aufgefasst werden.

In einer Ausführungsform werden die Daten zwischen dem ersten und den zweiten Fahrzeug über weitere Fahrzeuge übertragen. Dadurch wird ein gesamtes Netzwerk an Fahrzeugen ermöglicht, die die Weitergabe von Daten vornehmen. Durch die Weitergabe der Daten über die Fahrzeuge untereinander stehen jedem Fahrzeug mehr und bessere Übertragungskanäle zur Verfügung. Dies ist insbesondere der Fall, wenn dem ersten Fahrzeug auf der eigenen Fahrroute in den nächsten Zeiträumen keine guten Übertragungskanäle zur Verfügung stehen, dem zweiten Fahrzeug auf seiner Fahrroute aber schon.

In einer Ausführungsform sendet das erste Fahrzeug permanent Daten an weitere Fahrzeuge, wobei die weiteren Fahrzeuge die Daten an eine externe Empfangseinheit senden. Wenn die Daten von der externen Empfangseinheit empfangen wurden, wird eine fünfte Information über einen erfolgreichen Empfang der Daten an die weiteren Fahrzeuge gesendet, und die weiteren Fahrzeuge geben diese fünfte Information an das erste Fahrzeug weiter. Das erste Fahrzeug beendet nach der Übermittlung der fünften Information die permanente Aussendung der Daten. Durch dieses Verfahren wird es dem Fahrzeug ermöglicht, Daten zu versenden, obwohl keine Information über weitere Fahrzeuge und auch keine Informationen über gute Übertragungskanäle vorliegen.

In einer Ausführungsform sind ein oder mehrere Fahrzeuge, die als Relaisfunkstellen dienen, am Straßenrand abgestellt. Fahrzeuge, die am Straßenrand abgestellt sind, und, die als Relaisfunkstelle dienen, stellen quasi einen Übertragungskanal dar, der eine Kombination der festen Antennen am Straßenrand und der Übertragung über weitere Fahrzeuge ist.

In einer Ausführungsform ist das am Straßenrand abgestellte Fahrzeug ein Elektrofahrzeug, das an eine Ladestation angeschlossen ist. Elektrofahrzeuge, die an eine Datenstation angeschlossen sind, eignen sich besonders gut als Relaisfunkstelle, da durch den Anschluss an eine Ladestation eine Stromversorgung für den Funkverkehr vorhanden ist. Dadurch geht der Energieverbrauch, der bei der Weitergabe von Daten von Fahrzeugen an die zentrale Stelle notwendig ist, nicht zu Lasten der an Bord befindlichen Batterie, sondern kann aus dem Stromnetz bezogen werden.

In einer Ausführungsform sind mehrere Fahrzeuge zu einem Schwarm zusammengefasst, beziehungsweise bilden mehrere Fahrzeuge einen Schwarm. Ein erstes Fahrzeug des Schwarms empfängt Daten von den weiteren Fahrzeugen des Schwarms, fasst die Daten zusammen und gibt die zusammengefassten Daten über einen Übertragungskanal an die externe Empfangseinheit weiter. Ebenso werden Daten, die von einem Sender an das erste Fahrzeug gesendet werden, vom ersten Fahrzeug an die weiteren Fahrzeuge des Schwarms übermittelt. Das erste Fahrzeug des Schwarms übernimmt die Rolle des Zusammenfassens der Daten. Dadurch kann wiederum Bandbreite eingespart werden, da eine Übertragung der Daten nur von einem Fahrzeug zu einer externen Stelle notwendig ist. Die Kommunikation der Fahrzeuge untereinander, beziehungsweise die Datenübertragung zwischen den Fahrzeugen erfolgt über einen anderen Übertragungskanal, so dass der Übertragungskanal zwischen dem ersten Fahrzeug und der zentralen Stelle geschont wird.

In einer Ausführungsform weisen die Fahrzeuge eines Schwarms Fahrrouten auf, die ausgestaltet sind, dass an mindestens einem Ort die Weitergabe von Daten zwischen den Fahrzeugen möglich ist. Beispielsweise könnten vier Fahrzeuge auf eine Kreuzung aus verschiedenen Richtungen zufahren, wenn sie sich im Bereich der Kreuzung aufhalten, sämtliche Daten über Änderungen der Straßenverhältnisse an eines der vier Fahrzeuge weitergeben, und dieses eine Fahrzeug, das sämtliche Daten gesammelt hat, übernimmt nun die Kommunikation mit dem zentralen Server. Bei der Auswahl des Fahrzeuges, das die Kommunikation mit dem zentralen Server übernimmt ist es vorteilhaft, ein Fahrzeug auszuwählen, dem auf seiner weiteren Fahrroute gute Übertragungskanäle zur Verfügung stehen.

In einer Ausführungsform werden Informationen über die Fahrrouten der Fahrzeuge genutzt, um die Fahrzeuge zu einem Schwarm zusammenzufassen. Mehrere Fahrzeuge, die auf einer Straße in die gleiche Richtung unterwegs sind, können so zu einem Schwarm zusammengefasst werden, wobei die Kommunikation, bzw. die Übertragung von Daten von dem Schwarm zu einer zentralen Stelle von einem Fahrzeug des Schwarms übernommen wird. Die Fahrzeuge untereinander kommunizieren über einen anderen Übertragungskanal als die Kommunikation zwischen dem Fahrzeug, das die Kommunikation mit dem zentralen Server übernimmt, und dem zentralen Server. Dadurch wird auf den Übertragungskanälen des zentralen Servers Bandbreite eingespart.

Das Verfahren kann ausgeführt werden mithilfe eines Datenverarbeitungsgerätes zum Einbau in ein Fahrzeug nach Anspruch 11, wobei das Datenverarbeitungsgerät auf einen Sender und/oder einen Empfänger im Fahrzeug zugreifen kann.

Eine zentrale Stelle mit einem Datenverarbeitungsgerät nach Anspruch 12, einem Sender und einem Empfänger ist eingerichtet, das Verfahren auszuführen.

Ausführungsbeispiele der Erfindung werden anhand der folgenden Zeichnungen erläutert. In der schematischen Zeichnung zeigen:
- Fig. 1 und 2: die Übertragung von Daten über ein neues Verkehrszeichen an eine Empfangsstelle;
- Fig. 3: die Übertragung von Daten über ein neues Verkehrszeichen an ein Fahrzeug;
- Fig. 4: die Erfassung eines neuen Verkehrszeichens durch ein Fahrzeug;
- Fig. 5: die Übertragung von Daten von einem ersten Fahrzeug auf ein zweites Fahrzeug;
- Fig. 6: die Übertragung von Daten über ein am Straßenrand abgestelltes Fahrzeug;
- Fig. 7: einen Fahrzeugschwarm;
- Fig. 8: ein Fahrzeug mit Datenverarbeitungsgerät;
- Fig. 9: eine zentrale Recheneinheit; und
- Fig. 10: ein Straßennetz, das in verschiedene Bereiche mit unterschiedlicher Übertragungsqualität eingeteilt ist.

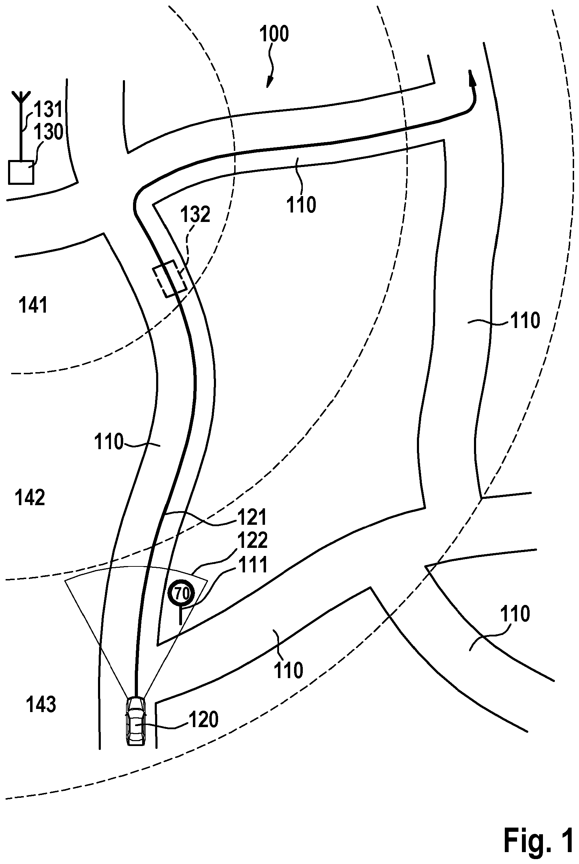

Die Fig. 1 zeigt ein Straßennetz 100 mit mehreren Straßen 110. Ein erstes Fahrzeug 120 befindet sich auf einer Straße 110 des Straßennetzes 100. Eine Fahrroute 121 des ersten Fahrzeuges, der das erste Fahrzeug im weiteren Verlauf folgen wird, ist ebenfalls eingezeichnet. Die Fahrroute 121 wird zum Beispiel vin einem Navigationssystem ermittelt und ist abgespeichert. Das erste Fahrzeug 120 weist Sensoren auf, mit denen das Umfeld des Fahrzeuges erfasst werden kann. Vor dem ersten Fahrzeug 120 befindet sich ein Sensorbereich 122 des ersten Fahrzeuges. In diesem Sensorbereich 122 des ersten Fahrzeuges ist das Fahrzeug in der Lage, mithilfe der Sensoren Veränderungen der Straße und der Umgebung zu erfassen. Weiterhin zeigt die Fig. 1 eine Funkstation 130 mit einer Antenne 131. Mittels gestrichelter Linien ist das Straßennetz 100 in drei Bereiche 141, 142, 143 eingeteilt. Der erste Bereich 141 erstreckt sich dabei direkt um die Funkstation 130. Der zweite Bereich 142 grenzt außen an den ersten Bereich 141 an. Der dritte Bereich 143 wiederum grenzt außen an den zweiten Bereich 142 an. Die drei Bereiche 141, 142, 143 sind also konzentrisch um die Funkstation 130 angeordnet. In den drei Bereichen 141, 142 und 143 ist die Übertragungsqualität für eine Funkübertragung von einem Fahrzeug zur Funkstation 130 unterschiedlich gut. Im ersten Bereich 141, der am nächsten an der Funkstation 130 liegt, ist die Übertragungsqualität für eine Funkübertragung von einem Fahrzeug zur Funkstation 130 am besten. Im zweiten Bereich 142, der von der Funkstation 130 weiter entfernt ist als der erste Bereich 141, ist die Übertragungsqualität für eine Funkübertragung schlechter als im ersten Bereich 141. Im dritten Bereich 143 ist die Übertragungsqualität für eine Funkübertragung von einem Fahrzeug zur Funkstation 130 am schlechtesten. Außerhalb der drei Bereiche 141, 142 und 143 kann keine Funkverbindung mehr zwischen einem Fahrzeug und der Funkstation 130 aufgebaut werden. Das erste Fahrzeug 120 befindet sich im dritten Bereich 143. Innerhalb des Sensorbereiches 122 des ersten Fahrzeuges 120 befindet sich ein Verkehrszeichen 111. Dieses Verkehrszeichen kann beispielsweise eine Geschwindigkeitsbegrenzung oder ein Überholverbot oder aber auch ein anderes Verkehrszeichen sein. Das erste Fahrzeug 120 ist mit einer digitalen Karte des Straßennetzes 110 ausgestattet, in die das Verkehrszeichen 111 noch nicht integriert ist. Innerhalb des Sensorbereichs 122 des ersten Fahrzeuges nimmt das Fahrzeug 120 neue Verkehrszeichen mithilfe der Sensoren, die zum Beispiel als Kamera ausgebildet sind, wahr. Das Verkehrszeichen 111 ist ein neues Verkehrszeichen, das noch nicht in die digitale Karte des Straßennetzes 100 integriert ist. Die Daten des Verkehrszeichens 111, also die Position und die Art des Verkehrszeichens, sollen nun an eine zentrale Recheneinheit mit einem Datenspeicher übermittelt werden. Die zentrale Recheneinheit mit Datenspeicher ist mit der Funkstation 130 verbunden, die Funkstation 130 stellt also einen Zugriffspunkt zur zentralen Recheneinheit mit Datenspeicher dar. Dem ersten Fahrzeug 120 liegt eine erste Information über die Übertragungsqualitäten einer Funkübertragung zum Funkempfänger 130 abhängig vom Ort vor. Dem ersten Fahrzeug 120 ist insbesondere bekannt, dass die Übertragungsqualität im ersten Bereich 141 am besten, im zweiten Bereich 142 schlechter als im ersten Bereich 141 und im dritten Bereich 143 noch schlechter als im zweiten Bereich 142 ist. Ebenso liegt dem Fahrzeug die Information vor, dass außerhalb des dritten Bereiches 143 gar keine Funkübertragung mehr zur Funkstation 130 möglich ist. Anhand der Fahrroute 121 des ersten Fahrzeuges ist das Fahrzeug in der Lage zu erkennen, dass seine Fahrroute durch den ersten Bereich 141 führen wird. Um eine möglichst gute Übertragungsqualität zu erreichen, legt das erste Fahrzeug 120 fest, dass es die Daten über das Verkehrszeichen 111 am Übertragungsort 132 übertragen wird. Der Übertragungsort 132 liegt dabei auf der Fahrroute 121 des ersten Fahrzeuges, an der Stelle, an der die Fahrroute 121 in den ersten Bereich 141 hineinführt.

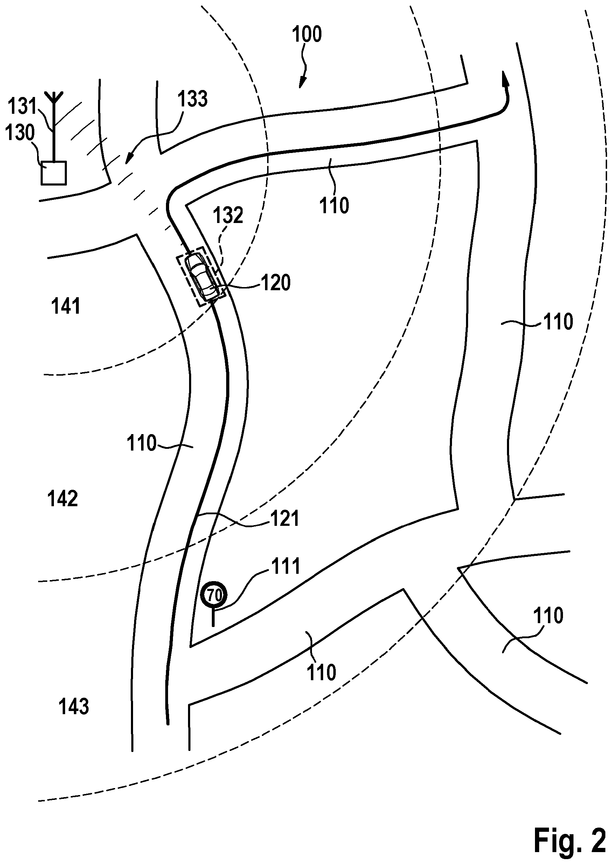

Die Fig. 2 zeigt das Straßennetz der Fig. 1, wobei sich das erste Fahrzeug 120 entlang der Fahrroute 121 des ersten Fahrzeuges weiterbewegt hat. Das erste Fahrzeug 120 befindet sich nun am Übertragungsort 132. Die Daten über das Verkehrszeichen 111 werden nun vom ersten Fahrzeug 120, da es sich am Übertragungsort 132 befindet, mittels Funkübertragung 133 an die Antenne 131 des Funkempfängers 130 weitergegeben und von dort an die zentrale Recheneinheit weitergeleitet. Danach folgt das erste Fahrzeug 120 weiter der Fahrroute 121. Je nach Größe und/oder Art der zu übertragenden Daten kann der Übertragungsort 132 auch ein größerer Bereich sein. Durch die Einteilung des Straßennetzes in die drei Bereiche 141, 142, 143 können Daten dann übertragen werden, wenn eine gute Übertragungsqualität zur Verfügung steht.

In einem Ausführungsbeispiel werden bei der Übermittlung des Übertragungszeitpunktes oder des Übertragungsortes die aktuell gefahrene und/oder die auf der Route des Fahrzeugs zu erwartende Geschwindigkeit berücksichtigt. Dies ist insbesondere dann vorteilhaft, wenn nur ein kleiner Bereich mit guter Übertragungsqualität zur Verfügung steht. Durch die Berechnung bzw. die Einbeziehung der aktuell gefahrenen oder zu erwartenden Fahrgeschwindigkeiten kann die Auswahl von Übertragungsort oder Übertragungszeitpunkt optimiert werden.

In einem Ausführungsbeispiel sind für die zu übertragenden Daten Kategorien definiert und in einem Speicher abgelegt. Den zu übertragenden Daten wird anhand der Kategorien eine Priorität zugeordnet, und die Priorität wird bei der Ermittlung des Übertragungszeitpunkts oder des Übertragungsortes berücksichtigt.

In einem Ausführungsbeispiel sind Mobilfunkverbindungen und Funkverbindungen zwischen Antennen am Straßenrand und Fahrzeugen als Übertragungskanäle vorgesehen. Ein Mobilfunkmodul, das in ein Fahrzeug eingebaut ist, dient gleichzeitig als Sender und Empfänger. Mittels des Mobilfunknetzes kann eine Datenübertragung vom Fahrzeug zur zentralen Stelle erfolgen, beispielsweise über das mobile Internet. Alternativ kann eine Antenne am Straßenrand als WLAN-Zugriffspunkt ausgeführt sein. Mittels eines WLAN-Moduls im Fahrzeug können Daten zwischen dem Fahrzeug und der an den WLAN-Zugriffspunkt angeschlossenen zentralen Stelle ausgetauscht werden. Funkverbindungen, die ein anderes Übertragungsprotokoll als die Genannten nutzen, sind ebenfalls denkbar.

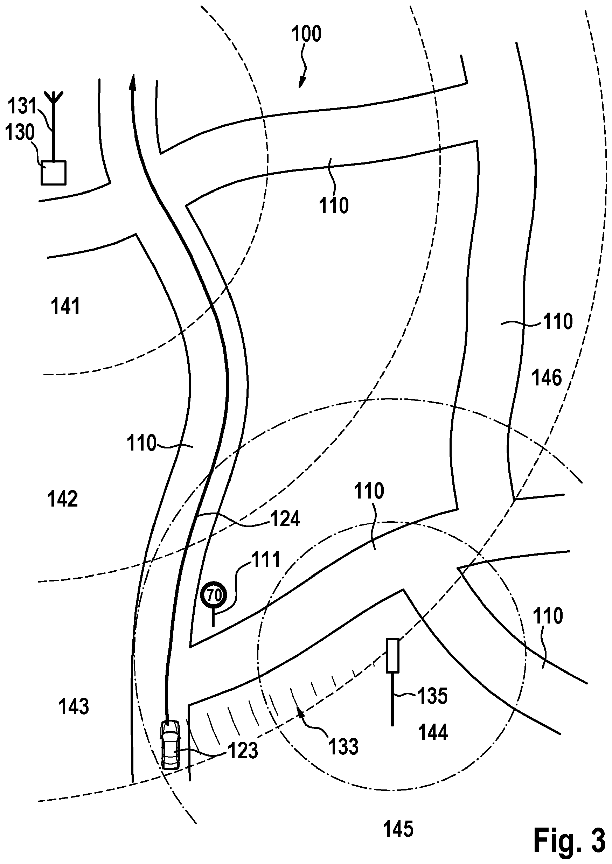

Fig. 3 zeigt ein Straßennetz 100 mit Straßen 110. Der Aufbau des Straßennetzes 100 entspricht dabei dem Straßennetz der Fig. 1. Eine Funkstation 130 mit Antenne 131 ist an derselben Stelle angeordnet wie in Fig. 1. Der erste Bereich 141, der zweite Bereich 142 und der dritte Bereich 143 definieren wieder Bereiche mit unterschiedlichen Übertragungsqualitäten für eine Funkübertragung zwischen der Funkstation 130 und Fahrzeugen, wobei die Übertragungsqualität im ersten Bereich 141 am besten, im zweiten Bereich 142 schlechter als im ersten Bereich 141 und im dritten Bereich 143 am schlechtesten ist. An einer anderen Stelle des Straßennetzes befindet sich ein Mobilfunkmast 135. Mittels strichgepunkteten Linien ist das Straßennetz 100 um den Mobilfunkmast 135 in einen vierten Bereich 144, einen fünften Bereich 145 und einen sechsten Bereich 146 eingeteilt. Der vierte Bereich 144 liegt dabei um den Mobilfunkmast 135, der fünfte Bereich 145 grenzt außen an den vierten Bereich 144 an und der sechste Bereich 146 grenzt außen an den fünften Bereich 145 an. Die Übertragungsqualität zwischen Fahrzeugen und dem Mobilfunkmast 135 ist im vierten Bereich 144 am besten, im fünften Bereich 145 schlechter als im vierten Bereich 144 und im sechsten Bereich 146 am schlechtesten. Ein zweites Fahrzeug 123 befindet sich auf einer Straße 110 des Straßennetzes 100, wobei sich das zweite Fahrzeug 123 sowohl im dritten Bereich 143 als auch im fünften Bereich 145 befindet. Die Fahrroute 124 des zweiten Fahrzeuges 123 ist so vorgesehen, dass das Fahrzeug vom fünften Bereich 145 in den sechsten Bereich 146 wechselt, andererseits das Fahrzeug aber vom dritten Bereich 143 durch den zweiten Bereich 142 und anschließend in den ersten Bereich 141 einfährt. Mit der geplanten Bewegung des zweiten Fahrzeuges 123 entlang der Fahrroute 124 wird sich also die Übertragungsqualität zwischen dem zweiten Fahrzeug 123 und dem Funkempfänger 130 immer weiter verbessern, während sich die Übertragungsqualität zwischen dem zweiten Fahrzeug 123 und dem Mobilfunkmast 135 immer weiter verschlechtern wird. Einer zentralen Recheneinheit, die sowohl mit der Funkstation 130 als auch mit dem Mobilfunkmasten 135 verbunden ist, liegen Daten über ein neues Verkehrszeichen 111 vor, die an das zweite Fahrzeug 123 weitergegeben werden sollen. Dabei befindet sich das Verkehrszeichen 111 sowohl im dritten Bereich 143 als auch im fünften Bereich 145, also in der Nähe des zweiten Fahrzeuges 123. Die Übertragungsqualität für eine Übertragung zwischen dem Mobilfunkmast 135 und dem zweiten Fahrzeug 123 ist im Bereich 145, in dem sich das Fahrzeug aktuell befindet, geringer als die Übertragungsqualität, die für die Fahrroute 124 erwartet wird, wenn sich das zweite Fahrzeug 123 näher an die Funkstation 130 hinbewegt. Da aber das zweite Fahrzeug 123 vor dem Passieren des Verkehrszeichens 111 über dieses informiert werden soll, muss die schlechtere Übertragungsqualität im fünften Bereich 145 über den Mobilfunkmast 135 in Kauf genommen werden. Deshalb werden die Daten über das Verkehrszeichen 111 mittels Funkverbindung 133 vom Mobilfunkmasten 135 an das zweite Fahrzeug 123 gesendet. Somit liegen dem zweiten Fahrzeug 123 nun die Daten über das Verkehrszeichen 111 vor.

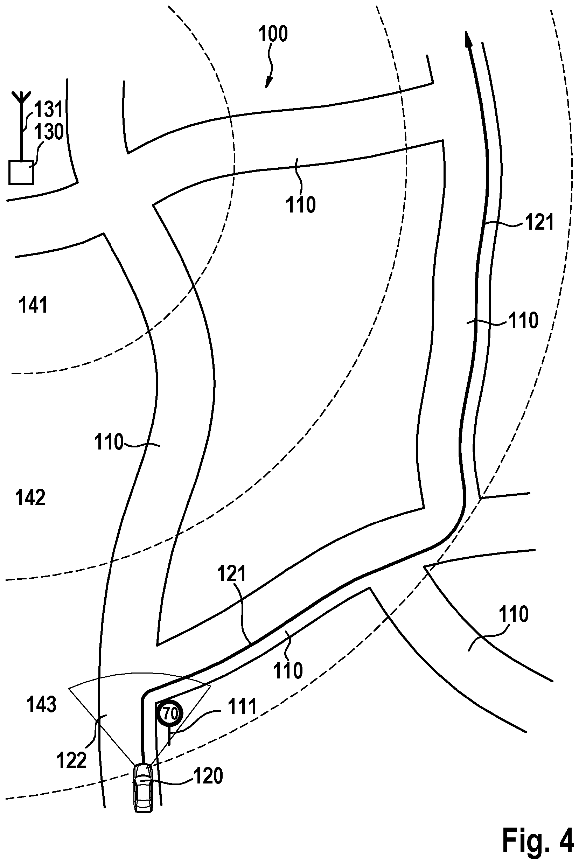

Die Fig. 4 zeigt das Straßennetz 100 der Fig. 1, mit den Straßen 110 und der Funkstation 130 mit Antenne 131. Die drei Bereiche 141, 142 und 143, die durch gestrichelte Linien getrennt sind, stellen wiederum Bereiche mit unterschiedlicher Übertragungsqualität zur Funkstation 130 dar. Ein erstes Fahrzeug 120 bewegt sich entlang der Fahrroute 121, die ausschließlich durch den dritten Bereich 143 mit schlechter Übertragungsqualität führt. Im Sensorbereich 122 des ersten Fahrzeuges 120 wird ein neues Verkehrszeichen 111 detektiert. Das erste Fahrzeug 120 hat keine gute Übertragungsqualität, bzw. keine gute Übertragungsmöglichkeit zur Funkstation 130. Dies wird sich auch auf der weiteren Fahrroute 121 nicht ändern.

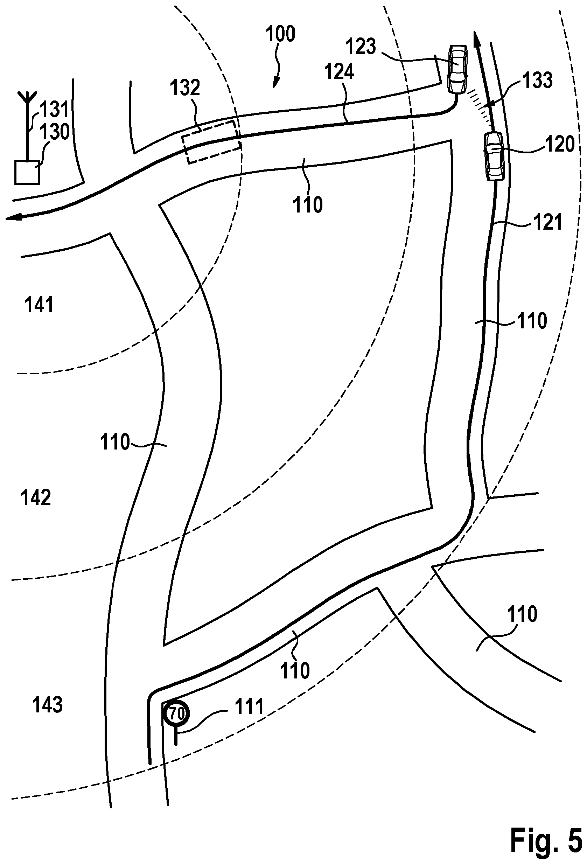

Die Fig. 5 zeigt das erste Fahrzeug 120 der Fig. 4, das sich auf seiner Fahrroute 121 weiterbewegt hat. Ein zweites Fahrzeug 123 kommt dem ersten Fahrzeug 120 entgegen, wobei die Fahrroute 124 des zweiten Fahrzeuges 123 näher an der Funkstation 130 vorbeiführt. Die Daten über das Verkehrszeichen 111 werden vom ersten Fahrzeug 120 mittels Funkverbindung 133 an das zweite Fahrzeug 123 weitergegeben. Das zweite Fahrzeug 123 weist einen entsprechenden Sender, einen entsprechenden Empfänger und einen Speicher auf. Das zweite Fahrzeug 123 erreicht, wenn es sich auf seiner Fahrroute 124 weiterbewegt, den Übertragungsort 132. Wenn das zweite Fahrzeug 123 den Übertragungsort 132 erreicht, wird es mittels Funkübertragung die Daten über das Verkehrszeichen 111 an die Funkstation 130 weitergeben. Die Weitergabe von Daten von einem ersten Fahrzeug über ein zweites Fahrzeug an eine Funkstation stellt einen weiteren Übertragungskanal dar. Das zweite Fahrzeug 123 dient in diesem Ausführungsbeispiel als Relaisfunkstelle zur Übertragung der Daten vom ersten Fahrzeug 120 zum zentralen Server über die Funkstation 130.

In einem Ausführungsbeispiel erfolgt die Kommunikation des ersten Fahrzeuges 120 mit dem zweiten Fahrzeug 123 über PWLAN, also eine öffentliche Drahtlosnetzwerkverbindung. Es sind aber auch andere drahtlose Übertragungsprotokolle denkbar.

In einem Ausführungsbeispiel werden Informationen über die Geschwindigkeiten des ersten und/oder des zweiten Fahrzeuges verwendet, um zu ermitteln, an welchem Zeitpunkt bzw. Ort die Daten vom ersten zum zweiten Fahrzeug übertragen werden sollen. Außerdem werden die Geschwindigkeiten der Fahrzeuge berücksichtigt, wenn der Übertragungsort vom zweiten Fahrzeug zur Funkstation ermittelt wird.

In einem Ausführungsbeispiel ist die Weitergabe von einem ersten Fahrzeug zu einem zweiten Fahrzeug über weitere Fahrzeuge vorgesehen, die als Relaisfunkstellen zwischen dem ersten und dem zweiten Fahrzeug dienen.

In einem Ausführungsbeispiel liegen einem ersten Fahrzeug keinerlei Informationen über weitere Fahrzeuge, und auch keine guten Übertragungskanäle vor. In diesem Fall ist des vorgesehen, dass das Fahrzeug Daten, die es für relevant hält, permanent aussendet. Ein zweites Fahrzeug, das die vom ersten Fahrzeug permanent ausgesendeten Daten empfängt, leitet diese über einen Übertragungskanal zur zentralen Recheneinheit weiter. Wenn das zweite Fahrzeug von der zentralen Recheneinheit die Rückmeldung über eine erfolgreiche Übermittlung der Daten erhält, gibt es diese Information an das erste Fahrzeug weiter, das daraufhin mit der permanenten Aussendung der Daten stoppt.

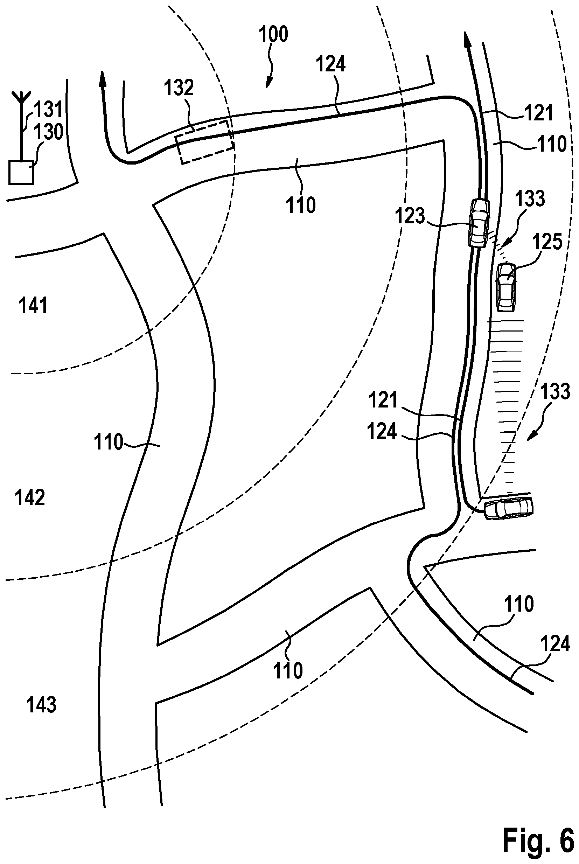

Die Fig. 6 zeigt das Straßennetz 100 der Fig. 1, mit der Funkstation 130 mit Antenne 131 und Straßen 110. Ein erstes Fahrzeug 120 befindet sich im dritten Bereich 143 und wird seiner geplanten Fahrroute 121 folgen, ohne den dritten Bereich 143 zu verlassen. Ein zweites Fahrzeug 123 fährt auf der Fahrroute 124, die vom dritten Bereich 143 in den zweiten Bereich 142 und dann in den ersten Bereich 141 führt. Ein am Straßenrand abgestelltes Fahrzeug 125 befindet sich zwischen dem ersten Fahrzeug 120 und dem zweiten Fahrzeug 123. Dem ersten Fahrzeug 120 liegen Daten vor, die an die zentrale Recheneinheit weitergeleitet werden sollen. Da auf der Fahrroute 121 des ersten Fahrzeuges 120 kein guter Übertragungskanal zur Verfügung steht, sendet das erste Fahrzeug 120 die Daten mittels Funkübertragung 133 an das Fahrzeug 125, das am Straßenrand abgestellt ist. Das Fahrzeug 125 überträgt die Daten mittels Funkübertragung 133 zum zweiten Fahrzeug 123, das daraufhin seiner Fahrroute 124 weiter folgt. An dem Punkt, an dem das zweite Fahrzeug 123 den ersten Bereich 141 erreicht, also am Übertragungsort 132, sendet das zweite Fahrzeug 123 die Daten mittels Funkübertragung zur Funkstation 130.

In einem Ausführungsbeispiel ist das am Straßenrand abgestellte Fahrzeug 125 ein Elektrofahrzeug, das an eine Ladestation angeschlossen ist. Wenn als abgestellte Fahrzeuge, die als Relaisfunkstation dienen, Fahrzeuge verwendet werden, die als Elektrofahrzeuge an eine Ladestation angeschlossen sind, so steht eine permanente Stromversorgung für den Empfang und die Weitergabe von Daten zur Verfügung.

In einem Ausführungsbeispiel empfängt das am Straßenrand abgestellte Fahrzeug 125 Daten von mehreren Fahrzeugen. Wenn mehrere Fahrzeuge Daten an das am Straßenrand abgestellte Fahrzeug 125 schicken, so kann das am Straßenrand abgestellte Fahrzeug 125 eine Vorauswahl der Daten treffen, beziehungsweise gleichartige Daten zusammenfassen. Anschließend überträgt das am Straßenrand abgestellte Fahrzeug 125 die Daten zur zentralen Recheneinheit, wobei gleichartige Daten nur einmal übertragen werden. Dadurch kann Bandbreite der Übertragungskanäle der zentralen Recheneinheit eingespart werden.

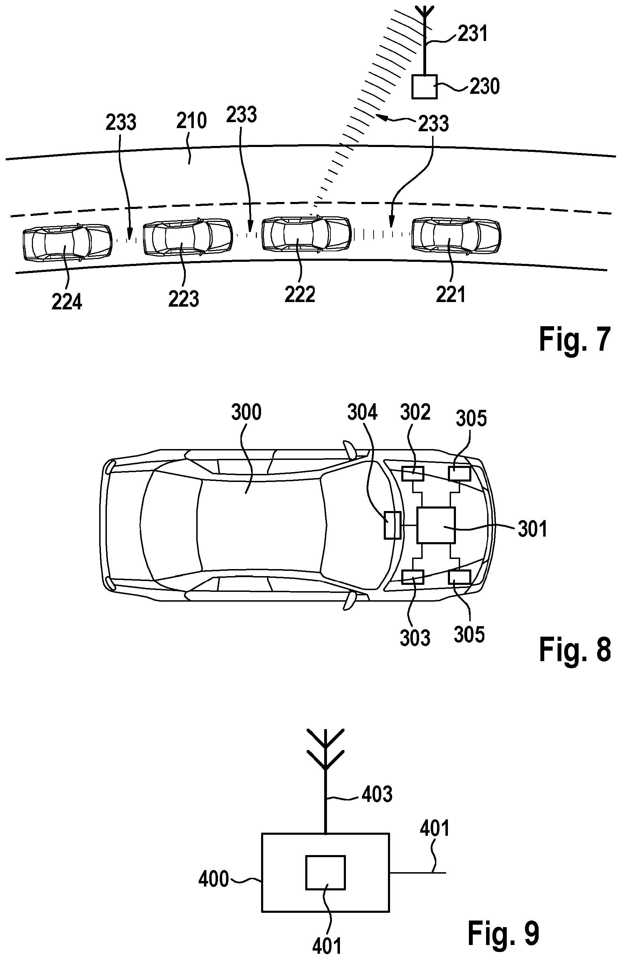

Die Fig. 7 zeigt eine Straße 210 mit vier Fahrzeugen 221, 222, 223, 224. Die Fahrzeuge 221, 222, 223, 224 bilden einen Fahrzeugschwarm. Mittels Funkübertragung 233 können Daten vom ersten Fahrzeug 221 an das zweite Fahrzeug 222 übertragen werden. Vom vierten Fahrzeug 224 können Daten mittels Funkübertragung 233 an das dritte Fahrzeug 223 und vom dritten Fahrzeug 223 an das zweite Fahrzeug 222 übertragen werden. Das zweite Fahrzeug 222 übernimmt zentral die Kommunikation, beziehungsweise die Weitergabe von Daten, von allen vier Fahrzeugen zu einer Funkstation 230 mit Antenne 231, wobei diese Weitergabe der Daten ebenfalls mit einer Funkübertragung 233 erfolgt. Dadurch, dass nur das zweite Fahrzeug 222 der vier Fahrzeuge mit dem zentralen Rechner kommuniziert, wird Bandbreite eingespart.

In einem Ausführungsbeispiel sind die Fahrrouten der Fahrzeuge eines Schwarmes so ausgestaltet, dass an mindestens einem Ort die Weitergabe von Daten zwischen den Fahrzeugen möglich ist. Insbesondere ist dies der Fall, wenn die Fahrzeuge auf derselben Straße in dieselbe Richtung fahren. Es ist aber ebenso möglich, dass sich die Fahrzeuge entgegenkommen, an bestimmten Straßen abbiegen oder andere Fahrmanöver durchführen.

In einem Ausführungsbeispiel werden Informationen über die Fahrrouten genutzt, um die Fahrzeuge zu Schwärmen zusammenzufassen. Dadurch wird es ermöglicht, dass Fahrzeuge, die eine ähnliche Fahrroute aufweisen und auf dieser Fahrroute zwangsläufig mit ihren Sensoren ähnliche Veränderungen der Straßen des Straßennetzes feststellen, diese Daten sammeln und dann zentral über ein Fahrzeug an die zentrale Recheneinheit weitermelden. Insbesondere durch dieses Vorgehen kann Bandbreite eingespart werden.

Die Fig. 8 zeigt ein Fahrzeug 300 mit einem Datenverarbeitungsgerät 301, das eingerichtet ist, eines der beschriebenen Verfahren auszuführen. Dazu ist das Datenverarbeitungsgerät 301 mit einem Sender 302, einem Empfänger 303 und einen Speicher 304 für die Karte des Straßennetzes ausgestattet. Der Sender 302 und der Empfänger 303 können auch als ein kombiniertes Sende- und Empfangsmodul realisiert sein. Außerdem weist das Fahrzeug 300 Sensoren 305 auf, mit denen Veränderungen der realen Welt zu der im Speicher 304 gespeicherten Karte detektiert werden können. Außerdem liegen dem Fahrzeug 300 Informationen über die Übertragungsqualitäten von verschiedenen Übertragungskanälen vor. Dies kann entweder durch eine im Speicher 304 gespeicherte Karte oder dadurch, dass das Fahrzeug 300 im Speicher 304 speichert, an welchem Ort gute Übertragungskanäle zur Verfügung stehen, und diese Information weitergibt, wobei die Information dann wieder an andere Fahrzeuge verteilt wird, ermöglicht sein.

Die Fig. 9 zeigt eine zentrale Recheneinheit 400 mit Datenverarbeitungsgerät 401, die eingerichtet ist, eines der Verfahren auszuführen. Die zentrale Recheneinheit 400 weist einen Anschluss 402 an das Internet auf, über den Daten von Zugriffspunkten, beispielsweise von Funkstationen, zur zentralen Recheneinheit und in die andere Richtung übertragen werden können. Außerdem weist die Recheneinheit 400 eine Antenne 403 auf, die ebenfalls einer Datenübertragung dient. Dabei kann auch nur eine der genannten Datenübertragungsmöglichkeiten realisiert sein.

Als Datenformat für die Karte sind alle gängigen digitalen Kartenformate denkbar. Die Informationen über die Übertragungsqualität von verschiedenen Übertragungskanälen abhängig von verschiedenen Orten kann auch als Quality-of-Service-Karte des Übertragungskanals bezeichnet werden. Eine Quality-of-Service-Karte für einen Übertragungskanal stellt die Information dar, an welchen Orten die Übertragungsqualität für diesen Kanal gut, nicht so gut, mittel, schlecht oder auch mit anderen Beschreibungen versehen ist. Die Quality-of-Service-Karte kann dabei entweder vom Netzbetreiber, beispielsweise bei einem Mobilfunknetz, bereitgestellt werden, oder sie ergibt sich aus den Standorten der Funkstationen.

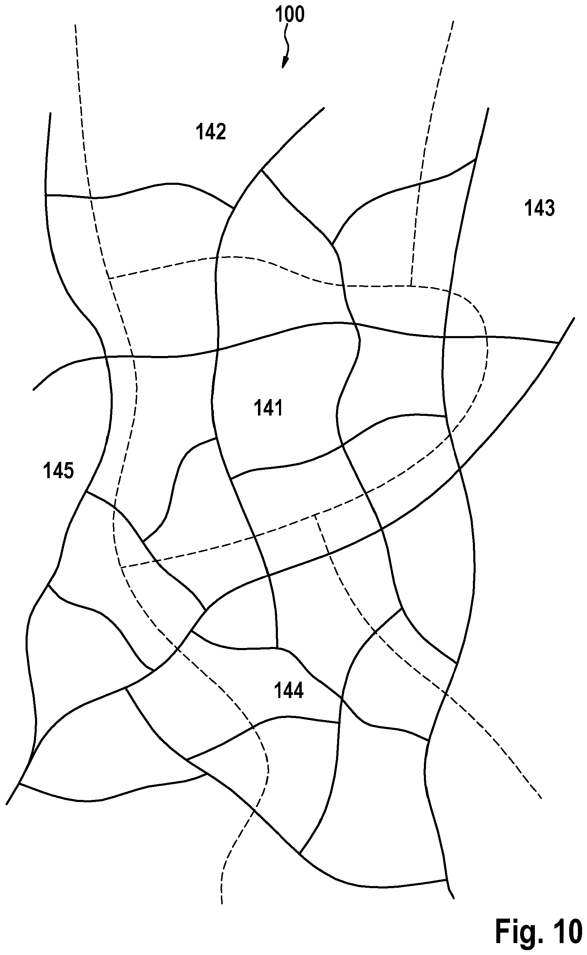

Die Fig. 10 zeigt ein Beispiel für eine Quality-of-Service-Karte eines Straßennetzes 100. Das Straßennetz 100, bei dem verschiedene Straßen durch durchgezogene Linien dargestellt sind, wird durch gestrichelte Linien in fünf Bereiche 141 bis 145 eingeteilt. In den verschiedenen Bereichen 141 bis 145 ist die Übertragungsqualität für einen Übertragungskanal unterschiedlich, wobei die Übertragungsqualität in jedem der fünf Bereiche 141 bis 145 konstant ist. Durch diese Quality-of-Service-Karte ist ein Fahrzeug, das sich auf dem Straßennetz 110 bewegt, in der Lage, abzuschätzen, wo eine gute Übertragung des ausgewählten Übertragungskanales möglich sein wird.

Beispiele für Daten, die von Fahrzeugen zur zentralen Recheneinheit oder von der zentralen Recheneinheit zum Fahrzeug übertragen werden, sind Verkehrszeichen, Baustellen, Spursperrungen auf mehrspurigen Straßen, Überholverbote oder Staus. Es können aber auch andere Informationen, die als Daten weitergebeben werden, eine Rolle spielen. Das Datenformat für diese Informationen umfasst insbesondere einerseits die Art und andererseits den Ort, wo diese Beeinträchtigung, oder, wo diese Veränderung zwischen digitaler Karte und realer Welt vorliegt.

## Patentansprüche

1. Verfahren zum Übertragen von Daten von einem ersten Fahrzeug (120) an eine externe Empfangseinheit (130), wobei eine Information vorgesehen ist, wobei die Information eine Übertragungsqualität für mindestens einen Übertragungskanal abhängig von mehreren Orten beinhaltet, wobei anhand einer Fahrroute (121) des ersten Fahrzeuges (120) und der Information ein Übertragungsort (132) ermittelt wird und die Daten übertragen werden, wenn der Übertragungsort (132) vom ersten Fahrzeug (120) erreicht wird, **gekennzeichnet dadurch, dass** ein Übertragungskanal darin besteht, dass eine zusätzliche Übertragung der Daten von einer Sendeeinrichtung (302) des ersten Fahrzeugs (120) an mindestens eine Empfangseinrichtung (303) eines zweiten Fahrzeugs (125) erfolgt, wobei das zweite Fahrzeug (125) am Straßenrand abgestellt ist, wobei das am Straßenrand abgestellte zweite Fahrzeug (125) Daten von mehreren Fahrzeugen (120, 123) empfängt und die von mehreren Fahrzeugen (120, 123) empfangenen Daten zusammenfasst und gebündelt an die externe Empfangseinheit (130) sendet.

2. Verfahren nach Anspruch 1, wobei bei der Ermittlung des Übertragungszeitpunkts oder des Übertragungsorts (132) die aktuell gefahrene und/oder die auf der Route (121) des ersten Fahrzeugs (120) zu erwartende Geschwindigkeit berücksichtigt werden.

3. Verfahren nach einem der vorhergehenden Ansprüche, wobei für die zu übertragenden Daten Kategorien definiert und in einem Speicher (304) abgelegt sind, wobei den zu übertragenden Daten anhand der Kategorien eine Priorität zugeordnet wird und die Priorität bei der Ermittlung des Übertragungszeitpunkts oder des Übertragungsorts (132) berücksichtigt wird.

4. Verfahren nach einem der vorhergehenden Ansprüche, wobei Mobilfunkverbindungen und Funkverbindungen zwischen Antennen (131) am Straßenrand und Fahrzeugen (120, 123, 125, 300) als Übertragungskanäle verwendet werden.

5. Verfahren nach einem der vorhergehenden Ansprüche, wobei die Daten über weitere Fahrzeuge (123) zwischen dem ersten Fahrzeug (120) und dem zweiten Fahrzeug (125) weitergegeben werden.

6. Verfahren nach einem der vorhergehenden Ansprüche, wobei das erste Fahrzeug (120) Daten permanent an weitere Fahrzeuge (123, 125) sendet, wobei die weiteren Fahrzeuge (123, 125) die Daten an eine externe Empfangseinheit (130) senden, wobei von der externen Empfangseinheit (130) eine fünfte Information über einen erfolgreichen Empfang der Daten an die weiteren Fahrzeuge (123, 125) gesendet wird und die weiteren Fahrzeuge (123, 125) die fünfte Information an das erste Fahrzeug (120) übermitteln, wobei das erste Fahrzeug (120) nach der Übermittlung der fünften Information die permanente Aussendung der Daten beendet.

7. Verfahren nach einem der vorhergehenden Ansprüche, wobei das abgestellte Fahrzeug (125) ein Elektrofahrzeug ist, wobei das Elektrofahrzeug an eine Ladestation angeschlossen ist.

8. Verfahren nach einem der vorhergehenden Ansprüche, wobei mehrere Fahrzeuge (120, 123, 300) einen Schwarm bilden, wobei ein erstes Fahrzeug (120) des Schwarms Daten von den weiteren Fahrzeugen (123, 300) des Schwarms empfängt und die Daten zusammenfasst, wobei die zusammengefassten Daten vom ersten Fahrzeug (120) über einen Übertragungskanal an die externe Empfangseinheit (130) weitergegeben werden und/oder Daten, die das erste Fahrzeug (120) von einem externen Sender erhält, vom ersten Fahrzeug (120) an die weiteren Fahrzeuge des Schwarms (123, 300) übermittelt werden.

9. Verfahren nach Anspruch 8, wobei die Fahrzeuge (120, 123, 300) eines Schwarmes Fahrrouten (121, 124) aufweisen, die ausgestaltet sind, dass an mindestens einem Ort die Weitergabe von Daten zwischen den Fahrzeugen (120, 123, 300) möglich ist.

10. Verfahren nach einem der Ansprüche 8 oder 9, wobei Informationen über die Fahrrouten (121, 124) der Fahrzeuge (120, 123, 300) genutzt werden, um einen Schwarm zu bilden.

11. Datenverarbeitungsgerät (301) zum Einbau in einem ersten und zweiten Fahrzeug (123), das eingerichtet ist, Daten von einem ersten Fahrzeug (120) über einen Sender (302) an eine externe Empfangseinheit (130) und an ein zweites Fahrzeug (125) zu übertragen und in dem zweiten Fahrzeug (125) Daten von einem ersten Fahrzeug (120) über einen Empfänger (303) zu empfangen, wobei eine Information vorgesehen ist, wobei die Information eine Übertragungsqualität für mindestens einen Übertragungskanal abhängig von mehreren Orten beinhaltet, wobei anhand einer Fahrroute (121) des ersten Fahrzeuges (120) und der Information ein Übertragungsort (132) ermittelt wird und die Daten an die externe Empfangseinheit (130) übertragen werden, wenn der Übertragungsort (132) vom ersten Fahrzeug (120) erreicht wird, **gekennzeichnet dadurch, dass** das zweite Fahrzeug (125) eingerichtet ist, während es am Straßenrand abgestellt ist, Daten von mehreren Fahrzeugen (120, 123) zu empfangen und die von mehreren Fahrzeugen (120, 123) empfangenen Daten zusammengefasst und gebündelt an die externe Empfangseinheit (130) zu senden.

12. Verwendung einer zentralen Stelle (400) mit Datenverarbeitungsgerät (401), die eingerichtet ist, die nach Ansprüchen 1 bis 10 vom ersten Fahrzeug (120) gesendeten Daten und von dem am Straßenrand abgestellten zweiten Fahrzeug (125) zusammengefasste und gebündelte Daten zu empfangen.

## Claims

1. Method for transmitting data from a first vehicle (120) to an external receiver unit (130), wherein an information item is provided, wherein the information item contains a transmission quality for at least one transmission channel in dependence on a plurality of locations, wherein a transmission location (132) is determined on the basis of a route (121) of the first vehicle (120) and the information item, and the data is transmitted when the transmission location (132) is reached by the first vehicle (120), **characterized in that** a transmission channel consists in the fact that additional transmission of the data occurs from a transmitter device (302) of the first vehicle (120) to at least one receiver device (303) of a second vehicle (125), wherein the second vehicle (125) is parked at the edge of the road, wherein the second vehicle (125) which is parked at the edge of the road receives data from a plurality of vehicles (120, 123) and combines the data received from a plurality of vehicles (120, 123) and sends it in a bundled fashion to the external receiver unit (130).

2. Method according to Claim 1, wherein the speed which is currently being travelled at and/or the speed expected on the route (121) of the first vehicle (120) are/is taken into account in the determination of the transmission time or of the transmission location (132).

3. Method according to one of the preceding claims, wherein categories are defined for the data to be transmitted and are stored in a memory (304), wherein the data to be transmitted is assigned a priority level on the basis of the categories and the priority level is taken into account in the determination of the transmission time or of the transmission location (132).

4. Method according to one of the preceding claims, wherein mobile radio links and radio links between antennas (131) at the edge of the road and vehicles (120, 123, 125, 300) are used as transmission channels.

5. Method according to one of the preceding claims, wherein the data is passed on between the first vehicle (120) and the second vehicle (125) via further vehicles (123).

6. Method according to one of the preceding claims, wherein the first vehicle (120) continuously sends data to further vehicles (123, 125), wherein the further vehicles (123, 125) send the data to an external receiver unit (130), wherein a fifth information item about successful reception of the data is sent from the external receiver unit (130) to the further vehicles (123, 125), and the further vehicles (123, 125) transfer the fifth information item to the first vehicle (120), wherein after the transfer of the fifth information item the first vehicle (120) ends the permanent emission of the data.

7. Method according to one of the preceding claims, wherein the parked vehicle (125) is an electric vehicle, wherein the electric vehicle is connected to a charging station.

8. Method according to one of the preceding claims, wherein a plurality of vehicles (120, 123, 300) form a swarm, wherein a first vehicle (120) of the swarm receives data from the further vehicles (123, 300) of the swarm and combines the data, wherein the combined data is passed on from the first vehicle (120) to the external receiver unit (130) via a transmission channel, and/or data which the first vehicle (120) receives from an external transmitter is transferred from the first vehicle (120) to the further vehicles of the swarm (123, 300).

9. Method according to Claim 8, wherein the vehicles (120, 123, 300) of a swarm have routes (121, 124) which are configured in such a way that it is possible to pass on data between the vehicles (120, 123, 300) at at least one location.

10. Method according to one of Claims 8 and 9, wherein information items about the routes (121, 124) of the vehicles (120, 123, 300) are used to form a swarm.

11. Data processing apparatus (301) for installation in a first and second vehicle (123), which is configured to transmit data from a first vehicle (120) via a transmitter (302) to an external receiver unit (130) and to a second vehicle (125) and to receive data in the second vehicle (125) from a first vehicle (120) via a receiver (303), wherein an information item is provided, wherein the information item contains a transmission quality level for at least one transmission channel in dependence on a plurality of locations, wherein a transmission location (132) is determined on the basis of a route (121) of the first vehicle (120) and the information item, and the data is transmitted to the external receiver unit (130) when the transmission location (132) is reached by the first vehicle (120), **characterized in that** the second vehicle (125) is configured to receive data from a plurality of vehicles (120, 123) while said vehicle is parked at the edge of the road, and to transmit the data received from a plurality of vehicles (120, 123) to the external receiver unit (130) in a combined and bundled fashion.

12. Use of a central location (400) with a data processing apparatus (401) which is configured to receive the data sent by the first vehicle (120) according to Claims 1-10 and to receive data which has been combined and bundled from the second vehicle (125) which is parked at the edge of the road.

## Revendications

1. Procédé de transmission de données d'un premier véhicule (120) à une unité de réception externe (130), une information étant prévue, l'information contenant une qualité de transmission d'au moins un canal de transmission en fonction d'une pluralité d'emplacements, un emplacement de transmission (132) étant déterminé sur la base d'un itinéraire (121) du premier véhicule (120) et de l'information et les données étant transmises lorsque l'emplacement de transmission (132) est atteint par le premier véhicule (120), **caractérisé en ce qu'**un canal de transmission consiste en une transmission supplémentaire des données d'un dispositif d'émission (302) du premier véhicule (120) à au moins un dispositif de réception (303) d'un deuxième véhicule (125), le deuxième véhicule (125) étant arrêté au bord de la route, le deuxième véhicule (125) arrêté au bord de la route recevant des données d'une pluralité de véhicules (120, 123) et regroupant les données reçues de plusieurs véhicules (120, 123) et les envoyant en faisceau à l'unité de réception externe (130).

2. Procédé selon la revendication 1, la vitesse de conduite actuelle et/ou la vitesse à prévoir sur l'itinéraire (121) du premier véhicule (120) étant prises en compte lors de la détermination de l'instant de transmission ou de l'emplacement de transmission (132).

3. Procédé selon l'une des revendications précédentes, des catégories étant définies pour les données à transmettre et étant stockées dans une mémoire (304), une priorité étant associée aux données à transmettre sur la base des catégories et la priorité étant prise en compte lors de la détermination de l'instant de transmission ou de l'emplacement de transmission (132).

4. Procédé selon l'une des revendications précédentes, des liaisons de téléphonie mobile et des liaisons radioélectriques entre des antennes (131) au bord de la route et des véhicules (120, 123, 125, 300) étant utilisées comme canaux de transmission.

5. Procédé selon l'une des revendications précédentes, les données concernant d'autres véhicules (123) étant transmises entre le premier véhicule (120) et le deuxième véhicule (125).

6. Procédé selon l'une des revendications précédentes, le premier véhicule (120) envoyant des données en permanence à d'autres véhicules (123, 125), les autres véhicules (123, 125) envoyant les données à une unité de réception externe (130), l'unité de réception externe (130) envoyant aux autres véhicules (123, 125) une cinquième information en cas de réception réussie des données et les autres véhicules (123, 125) transmettant la cinquième information au premier véhicule (120), le premier véhicule (120) terminant l'émission permanente des données après la transmission de la cinquième information.

7. Procédé selon l'une des revendications précédentes, le véhicule arrêté (125) étant un véhicule électrique, le véhicule électrique étant raccordé à une station de charge.

8. Procédé selon l'une des revendications précédentes, une pluralité de véhicules (120, 123, 300) formant un essaim, un premier véhicule (120) de l'essaim recevant des données des autres véhicules (123, 300) de l'essaim et regroupant les données, les données regroupées étant transmises du premier véhicule (120) à l'unité de réception externe (130) par le biais d'un canal de transmission et/ou des données, que le premier véhicule (120) reçoit de l'émetteur externe, étant transmises du premier véhicule (120) aux autres véhicules de l'essaim (123, 300).

9. Procédé selon la revendication 8, les véhicules (120, 123, 300) d'un essaim comportant des itinéraires (121, 124) qui sont conçus de telle sorte que le transfert de données entre les véhicules (120, 123, 300) soit possible en au moins un emplacement.

10. Procédé selon l'une des revendications 8 et 9, des informations sur les itinéraires (121, 124) des véhicules (120, 123, 300) étant utilisées pour former un essaim.

11. Dispositif de traitement de données (301) destiné à être installé dans un premier et un deuxième véhicule (123) et conçu pour transmettre des données d'un premier véhicule (120) à une unité de réception externe (130) et à un deuxième véhicule (125) par le biais d'un émetteur (302) et pour recevoir dans le deuxième véhicule (125) des données provenant d'un premier véhicule (120) par le biais d'un récepteur (303), une information étant prévue, l'information contenant une qualité de transmission de l'au moins un canal de transmission en fonction d'une pluralité d'emplacements, un emplacement de transmission (132) étant déterminé sur la base d'un itinéraire (121) du premier véhicule (120) et de l'information, et les données étant transmises à l'unité de réception externe (130) lorsque l'emplacement de transmission (132) est atteint par le premier véhicule (120) **caractérisé en ce que** le deuxième véhicule (125) est conçu, alors qu'il est arrêté sur le bord de la route, pour recevoir des données de la pluralité de véhicules (120, 123) et pour envoyer les données reçues de plusieurs véhicules (120, 123) de manière regroupée et mise en faisceau à l'unité de réception externe (130).

12. Utilisation d'un point central (400) comprenant un dispositif de traitement de données (401) qui est conçu pour recevoir les données envoyées selon les revendications 1 à 10 par le premier véhicule (120) et des données regroupées et mises en faisceau provenant du deuxième véhicule (125) arrêté sur le bord de la route.
